# EUROPÄISCHE PATENTSCHRIFT

(11) **EP 0 987 096 B1**
(45) Veröffentlichungstag und Bekanntmachung des Hinweises auf die Patenterteilung: **23.06.2010**
(21) Anmeldenummer: 99116410.4
(22) Anmeldetag: 20.08.1999
(51) Int. Cl.: B32B 3/10, B32B 7/04, B32B 18/00, C04B 35/573, C04B 35/80, C04B 37/00, C04B 41/52

(54) **LEICHTGEWICHTSSTRUKTUR**
LIGHT WEIGHT STRUCTURE
STRUCTURE LÉGÈRE

(30) Priorität: 20.08.1998 DE 19837768
(43) Veröffentlichungstag der Anmeldung: 22.03.2000
(73) Patentinhaber: ECM Ingenieur-Unternehmen für Energie- und Umwelttechnik GmbH, 80339 München (DE)
(72) Erfinder: Goedtke, Peter, 81667 München (DE); Krödel, Matthias, 85521 Ottobrunn (DE); Papenburg, Ulrich, 85658 Egmating (DE)
(74) Vertreter: Bohnenberger, Johannes

(56) Entgegenhaltungen:
- EP-A- 0 735 387
- DE-A- 4 136 880
- DE-A- 4 207 009
- DE-A- 4 329 551
- DE-A- 4 438 456

## Beschreibung

Die Erfindung bezieht sich auf eine hochsteife Leichtgewichtstruktur, insbesondere für Meß-, Spann- und Bearbeitungszwecke, die zwischen einer Frontplatte aus faserverstärkter Keramik und einer Rückplatte aus faserverstärkter Keramik ein mit diesen Platten unverrückbar verbundenes Stützgerüst aus faserverstärkter Keramik aufweist, wobei die jeweils für die Front- und Rückplatten und das Stützgerüst ausgewählten keramischen Verbundwerkstoffe, vorzugsweise kohlenstoffaserverstärkte Kohlenstoffe (C/C) oder kohlenstoffaserverstärktes Silciumcarbid (C/SiC), gleiche thermische Ausdehnungskoeffizienten aufweisen, und auf ein Verfahren zur Herstellung einer solchen keramischen Leichtgewichtstruktur in Sandwich-Bauweise mit hoher Steifigkeit. Die Bildung der Verbindung zwischen Frontplatte, Rückplatte und Stützgerüst erfolgt über die Reaktionsinfiltration von flüssigem Silicium in das zuvor geklebte Halbzeug und führt nach der Abkühlung zur Ausbildung einer monolithischen Leichtgewichtstruktur hoher Steifigkeit aus faserverstärkter Keramik, vorzugsweise kohlenstoffaserverstärktem Siliciumcarbid (C/SiC), in Sandwich-Bauweise.

Aus der US-PS 2988959 ist ein Leichtgewichtspiegel in Sandwich-Form bekannt, der aus einer Frontplatte und einer im Abstand zueinander angeordneten Rückplatte besteht, die über im Abstand zueinander angeordnete Rohrstücke unverrückbar miteinander verbunden sind. Die Rohrstücke bilden das Stützgerüst des Spiegels. Als Werkstoffe für die Frontplatte, die Rückplatte und die Rohrstücke wird Glas verwendet. Die Herstellung des Spiegels erfolgt in der Weise, daß die Rohrstücke mittels eines Bindemittels mit der einen Platte und danach in gleicher Weise mit der anderen Platte verbunden werden. Diese bekannten Spiegel sind einfach in ihrem Aufbau, sie besitzen jedoch eine nicht ausreichende Steifigkeit gegen Kräfte, die parallel zur Rückplatte wirken. Außerdem zeigen derartige Kleber im Einsatz Formveränderungen durch chemische Veränderungen und Wasseraufnahme. Derartige Bauteile sind somit nicht langzeitstabil.

Bekannt sind aus der GP-PS 11 67 898 Leichtgewichtspiegel, bei denen die Frontplatte und die Rückplatte über ein Stützgerüst miteinander verbunden sind, das entweder aus Rohrstücken besteht oder aus Abstandsgliedern, die im Querschnitt die Form eines Kreuzes aufweisen. Anstelle der genannten Rohrstücke oder Abstandsglieder mit der Form eines Kreuzes im Querschnitt können auch Abstandsglieder verwendet werden, die durch zusammengesteckte Streifen bestehen, die eine Art Tragrost-Konstruktion aufweisen. Die Leichtgewichtspiegel bestehen aus thermisch kristallisiertem Glas (Glaskeramik), das einen SiO₂-Gehalt von bis zu 70 Gew.-% aufweist und dessen andere Hauptbestandteile LiO₂ und Al₂O₃ sind. Anstelle dieses thermisch kristallisierbaren Glases hat man zur Herstellung derartiger Leichtgewichtspiegel auch schon hochsilikatische Gläser (Gläser mit einem SiO₂-Gehalt von mindestens 90 Gew.-%, deren thermischer Ausdehnungskoeffizient durch Zugabe von Dotiermitteln, wie beispielsweise TiO₂, auf einen Wert eingestellt wird, der dem thermischen Ausdehnungskoeffizienten von Quarzglas gleich oder sogar kleiner als dieser ist) verwendet. Solche Spiegel sind im Handel (Prospekt "Low Expansion Materials" der Fa. Corning Glass Works, Corning N.Y., USA, 1969). Nachteilig bei diesen Spiegeln ist eine relativ geringe Steifigkeit und Festigkeit von Glas und Glaskeramik sowie die niedrige Wärmeleitfähigkeit, was bei Temperaturdifferenzen zu Temperaturinhomogenitäten, hohen thermischen Zeitkonstanten und somit lokalen Verformungen im Einsatz führt.

Zur Verbesserung der Querstabilität sind in der GB-PS 11 26 930 Leichtgewichtspiegel beschrieben, bei denen das Stützgerüst aus einer Platte besteht, die mit durchgehenden Bohrungen versehen ist. Als Werkstoff für diese Strukturen wurde für die Spiegelplatte Quarzglas und für das Stützgerüst Quarzgut verwendet. Die Rückplatte besteht dabei ebenfalls aus Quarzglas oder Quarzgut. Nachteilig bei diesem Verfahren ist, daß durch die Verwendung von zwei unterschiedlichen Werkstoffen sogenannte "Bi-Metall-Effekte" innerhalb der Struktur entstehen.

Bekannt sind aus der US-PS 36 44 022 Leichtgewichtspiegel, bei denen das Stützgerüst aus Y-förmigen Bauelementen gebildet ist, die zu einem honigwabenartigen Stützgerüst hoher Steifigkeit verschweißt sind. Als Werkstoff wurde für diese Struktur siliciumdioxidhaltiges Material verwendet. Die Schweißnähte führen zu entsprechenden Inhomogenitäten in der Struktur.

Die in den letztgenannten Patenten beschriebenen Leichtgewichtspiegel-Ausbildungen besitzen zwar die gewünschte ausreichende Steifigkeit, insbesondere auch Steifigkeit gegenüber parallel zur Rückplatte wirkender Kräfte, jedoch ist ihre Herstellung außerordentlich arbeitsaufwendig und mit großem Risiko in bezug auf eine fehlerfreie Herstellung behaftet. Dies wird deutlich, wenn man bedenkt, daß beim Bohren der Löcher oder beim Verschweißen der das Stützgerüst bildenden Bauteile Sprünge auftreten können.

Aus der DE 30 18 785 C2 ist ein Verfahren zur Herstellung von Leichtgewichtspiegeln bekannt, bei der zwischen einer Frontplatte aus Quarzglas oder hochsilikatischem Glas und einer Rückplatte aus Quarzglas, Quarzgut oder hochsilikatischem Glas ein mit diesen Platten unverrückbar verbundenes Stützgerüst aus Quarzglas, Quarzgut oder hochsilikatischem Glas aufweist, wobei die jeweils für die Platten und das Stützgerüst ausgewählten Werkstoffe gleiche thermische Eigenschaften aufweisen. Nachteilig bei diesem Verfahren ist die Verwendung unterschiedlicher Glas-Werkstoffe in Kombination mit Sintermassen anderer Zusammensetzung. Dieses führt zu entsprechenden Struktur-Inhomogenitäten. Außerdem sind Sinterhilfsmittel und darüber hinaus mehrere thermische Behandlungsprozesse notwendig. Ein Großteil der Hohlräume ist mit Sintermasse aufgefüllt, was das Leichtgewicht-Potential wesentlich einschränkt.

Ferner beschreibt die DE 44 38 456 A1 eine, insbesondere als Brems- oder Kupplungskörper ausgebildete Reibeinheit, die aus einem kohlenstofffaserverstärkten porösen Kohlenstoffkörper gebildet ist, dessen Poren zumindest teilweise mit Siliciumcarbid gefüllt sind. Die Reibeinheit ist aus mindestens einem Kernkörper und zumindest einem mit diesem fest verbundenen Reibkörper gebildet, wobei der Reibkörper mit dem Kernkörper auf seiner einer Reibfläche abgekehrten Seite verbunden ist und wobei beide Körper über eine hochtemperaturbeständige Verbindungsschicht verbunden sind. Verfahrensseitig wird der dortige Reibkörper dadurch hergestellt, dass zunächst ein kohlenstofffaserverstärkter poröser Kohlenstoffkörper bereitgestellt und bei einer Temperatur im Bereich von 1.410°C bis 1.700°C mit flüssigem Silicium infiltriert wird. Der auf solche Art hergestellte silicierte Kohlenstoffkörper, beispielsweise der Reibkörper, wird gemäß dortiger Offenbarung sodann über vorgenannte hochtemperaturbeständige Verbindungsschicht mit einem weiteren Körper, nämlich dem Kernkörper, verbunden. Ein wesentlicher Nachteil der in der DE 44 38 456 A1 beschriebenen Reibeinheit besteht jedoch darin, dass dort keine großen Leichtgewichtsstrukturen mit gegebenenfalls komplexer Geometrie hergestellt werden können, sodass die dort beschriebene Reibeinheit sowohl hinsichtlich ihrer Geometrie als auch hinsichtlich Ihrer Größe limitiert ist und keinen umfassenden Einsatz, insbesondere nicht als Unterlage für Mess-, Spann- oder Metallbearbeitungszwecke, sowie für große Stütz- und Spiegelstrukturen zulässt, sondern immer auf einen Körper beschränkt, der auf einer Grundstruktur der verwendeten Reibeinheit sowie des verwendeten Kernkörpers beschränkt ist.

Stand der Technik für die zuvor angesprochenen Anwendungen sind auch massive Granit-Platten. Zur Gewichtsreduzierung müssen diese über aufwendige Verfahren und mit speziellen Werkzeugen entsprechend geschliffen werden.

Pulvermetallurgisch hergestellte Keramiken auf der Basis von Aluminiumoxid, Siliciumnitrid oder Siliciumcarbid sind aufgrund der erheblichen Schwindung während des Sinterprozesses sowohl in der Bauteilgröße als auch in der minimalen Wandstärke limitiert. Stand der Technik sind bisher nur Größen von < 700 mm. Größere Strukturen, auch als Vollblock, haben aufgrund der nicht-linearen Schwindung während der Herstellung immer Risse gezeigt.

Demgemäß hat sich die Erfindung die Aufgabe gestellt, eine Leichtgewichtstruktur aus faserverstärkter Keramik in einer Art "Sandwich"-Bauweise mit hoher Steifigkeit und Festigkeit auch beim Auftreten von Querkräften zu schaffen, die eine stabile Vorder- und Rückseite aufweist, die nicht größenlimitiert ist, und die mittels einer gegebenenfalls komplexen Geometrie einer Frontplatte und/oder einer Rückplatte zur Herstellung eines hochbelastbaren Körpers geschaffen wird, der auch höchsten Genauigkeitsanforderungen auf Dauer entspricht und die einfach und preiswert herzustellen ist und deren Herstellungsverfahren die aufgezeigten Mängel bekannter Herstellungsverfahren für das Stützgerüst nicht aufweist und darüber hinaus die werkstoffbedingten Nachteile (niedrige Steifigkeit und Festigkeit sowie Wärmeleitfähigkeit u.a.) der Glas- und Glaskeramik-Werkstoffe durch den Einsatz von faserverstärkten Keramiken ausschaltet. Außerdem sieht das erfindungsgemäße Verfahren die Herstellung der Verbindung zwischen Frontplatte, Rückplatte und Stützgerüst zu einer monolithischen Sandwich-Struktur in nur einem thermischen Behandlungsschritt und ohne Sinterhilfsmittel vor. Damit besteht die mololithische Leichtgewichtstruktur aus faserverstärkter Keramik im Vergleich zum Stand der Technik insgesamt nur aus einem homogenen Werkstoff mit gleichen physikalischen Eigenschaften.

Weiterhin ist Aufgabe der Erfindung, eine Leichtgewichtstruktur, einen Grünkörper zur Herstellung einer solchen Leichtgewichtstruktur sowie ein Verfahren zur Herstellung einer Leichtgewichtstruktur dahingehend aufzuzeigen, daß in einfacher Weise ein hochbelastbarer Körper geschaffen wird, der auch höchsten Genauigkeitsanforderungen auf Dauer entspricht.

Die Leichtgewichtsstruktur umfaßt eine Frontplatte, eine Rückplatte und ein Stützgerüst, das die Frontplatte mit der Rückplatte unter Bildung mindestens eines Hohlraumes verbindet. Die Frontplatte, die Rückplatte und das Stützgerüst sind aus im wesentlichen identischem Material aufgebaut, nämlich aus kohlestoffaserverstärktem Siliciumcarbid (C/SiC). Das Stützgerüst ist mit der Frontplatte und der Rückplatte über einen Bestandteil des Materials nämlich über Silicium durch einen Schmelzvorgang bzw. durch Infiltrieren mit dem geschmolzenen Bestandteil des Materials (Silicium) zur Bildung einer monolithischen Struktur verbunden. Der Gehalt aus nicht-silicierten Kohlenstoffasern kann räumlich leicht varieren, wobei die Variation graduell erfolgt, also keine Sprünge aufweist.

Die Frontplatte und/oder die Rückplatte besteht aus mehreren Segmenten, die über Silicium durch einen Schmelzvorgang oder durch Infiltrieren mit Silicium miteinander verbunden sind. Durch derartige abschnittsweise Aufbauten können in besonders einfacher Weise größere Stücke geschaffen werden.

Das Stützgerüst kann aus einzelnen, voneinander getrennten Stücken bestehen, die als Massiv- oder als Hohlprofile ausgebildet sind. Diese Profile können den Anforderungen entsprechende Formen bzw. Querschnitte aufweisen, wie dies weiter unten beschrieben wird.

Das Stützgerüst kann auch aus miteinander verbundenen Strukturen hergestellt werden. Beispielweise kann man ein Stützgerüst in Form einer Wabenstruktur oder auch in Form einer Lochplatte ausbilden.

Die Rückplatte und/oder die Frontplatte weisen vorzugsweise Bohrungen oder Öffnungen auf, welche den zwischen ihnen bestehenden Hohlraum bzw. die dort liegenden Hohlräume mit der Außenseite (der Atmosphäre) verbinden. Der erfindungsgemäße Grünkörper zur Herstellung dieser Leichtgewichtsstruktur umfaßt eine Frontplatte, eine Rückplatte und ein Stützgerüst, das die Frontplatte mit der Rückplatte unter Bildung mindestens eines Hohlraumes verbindet. Das Stützgerüst ist mit der Frontplatte und/oder mit der Rückplatte, vorzugsweise mit beiden über Befestigungsmittel im wesentlichen unverrückbar verbunden und besteht wie auch die Front- und die Rückplatte aus kohlenstoffaserverstärktem Kohlenstoff (C/C) aus kohlenstoffaserverstärktem Silicium (C/SiC) oder aus einer Mischung hiervon.

Die Befestigungsmittel können als formschlüssige Verbindungseinrichtungen, insbesondere in Form von Schrauben, Bolzen oder Stiften ausgebildet sein. Das Stützgerüst kann auch in entsprechende Ausnehmungen in der Frontplatte und/oder in der Rückplatte formschlüssig eingesetzt sein, so daß die unverrückbare Befestigung hierdurch gegeben ist. Alternativ oder auch zusätzlich kann das Stützgerüst mit der Frontplatte bzw. der Rückplatte über eine Sinterschicht oder eine Verklebung fest verbunden sein. Derartige Verklebungen sind besonders leicht herstellbar. Die Verklebung oder die Sinterschicht umfaßt vorzugsweise ein Kunstharz, insbesondere ein Phenolharz. Das Kunstharz ist vorzugsweise mit Füllstoffen in Form von Kohlenstoff, Siliciumcarbid, Silicium oder Mischungen hiervon versehen und ist derart beschaffen, daß die Verklebung beim Schmelzvorgang oder beim Infiltrieren mit Silicium zum identischen Material entsprechend dem Material der Frontplatte, der Rückplatte und des Stützgerüstes umgewandelt wird.

Die Kohlenstoffasern werden vorzugsweise als Kurzfasern, als Gewebe, als Filz oder Mischungen hiervon hergestellt.
Zusätzlich, gegebenenfalls auch alternativ kann der Kohlenstoff in Form von Schaum vorliegen, was eine weitere Gewichtsverminderung mit sich bringt.

Das erfindungsgemäße Verfahren zur Herstellung der Leichtgewichtstrukturen umfaßt folgende Schritte:
a) Es werden eine Frontplatte, eine Rückplatte und ein Stützgerüst jeweils aus kohlenfaserverstärktem Kohlenstoff (C/C) oder aus kohlenstoffaserverstärktem Silicium (C/SiC) hergestellt.
b) Das Stützgerüst wird mit der Frontplatte und der Rückplatte derart unverrückbar verbunden, daß das Stützgerüst zwischen der Frontplatte und der Rückplatte liegt. Dadurch wird ein Grünkörper mit mindestens einem Hohlraum zwischen der Frontplatte und der Rückplatte gebildet.
c) Der Grünkörper wird in einen Ofen eingebracht und aufgeheizt, wobei eine nicht oxidierende Atmosphäre bzw. eine nicht oxidierende Umgebung (insbesondere ein Vakuum) beibehalten bleiben. Die Aufheizung erfolgt auf eine Temperatur, die mindestens der Schmelztemperatur von Silicium (1405°C) entspricht.
d) Es wird geschmolzenes Silicium dem Grünkörper derart zugeführt, daß das Silicium in den Grünkörper eindringt und ihn infiltriert, wobei mindestens Teile des Kohlenstoffs zur Bildung von Siliciumcarbid (SiC) unter Bildung der Leichtgewichtstruktur abreagiert.
e) Danach wird die Leichtgewichtstruktur abgekühlt.

Vorzugsweise wird im Schritt b) das Stützgerüst mit der Frontplatte und der Rückplatte verklebt. Dadurch kann ohne größere Probleme eine zuvor festgelegte Struktur beibehalten bleiben, auch wenn der Grünkörper transportiert wird.

Besonders einfach ist die Verklebung dann, wenn die Frontplatte und die Rückplatte jeweils mit einer Klebeschicht versehen und das Stützgerüst über die Klebeschicht mit der Frontplatte und der Rückplatte verbunden werden.

Die Zuführung des Siliciums (im Schritt d) zum Grünkörper erfolgt in Form von Siliciumgranulat oder Siliciumpulver. Hierbei kann das Siliciumpulver bzw. das Siliciumgranulat durch Auflegen auf den Grünkörper, durch Einbringen von Silicium in den Hohlraum sowie von unten durch Einbringen des Grünkörpers in ein Siliciumbett zugeführt werden. Das Silicium wird also mit dem Grünkörper zusammen aufgeheizt. Vorzugsweise ist hierbei das Silicium innerhalb von Hohlkugeln aus porösem Material angeordnet, wie dies an sich bekannt ist. Dadurch erfolgt ein sukzessives Abgeben des Siliciums an den Grünkörper.

Die Kohlenstoffasern werden vorzugsweise als Kurzfasern, als Gewebe, als Filz oder als Mischungen hiervon hergestellt. Auch Kohlenstoffschaum eignet sich (zusätzlich oder alternativ). Die so hergestellten Leichtgewichtstrukturen eignen sich besonders als Stützstrukturen oder Unterlagen für Meß-, Spann- oder Materialbearbeitungszwecke. Es können also Meß- und Spanntische, Meßbänke, Führungsschienen und -bahnen, Maschinenbetten und Maschinentische mit vorzüglichen Eigenschaften hergestellt werden.

Bei der Leichtgewichtstrukur der eingangs charakterisierten Art wird das Stützgerüst aus plattenförmigen und/oder leistenförmigen und/oder rohrförmigen und/oder T-förmigen und/oder U-förmigen und/oder T-förmigen und/oder Y-förmigen Teilen hergestellt, die mittels eines Kunstharzes unverrückbar untereinander, einen Hohlraum bildend, verbunden sind, wobei die Front- und Rückplatte einerseits aus dem gleichen Werkstoff wie die platten- und/oder leisten- und/oder rohrförmigen und/oder T-förmigen und/oder U-förmigen und/oder T-förmigen und/oder Y-förmigen Teile der Stützstruktur besteht und andererseits der Kunstharz bei der thermischen Behandlung bzw. Infiltration des geklebten Sandwich-Halbzeugs mit Silicium zu einer monolithischen Struktur ebenfalls zum gleichen Werkstoff, vorzugsweise faserverstärkter Keramik, abreagiert. Durch die Reaktionsinfiltration des geklebten Halbzeuges mit geschmolzenem Silicium kommt es zur Herstellung der homogenen Verbindung zwischen Frontplatte, Rückplatte und dem Stützgerüst und dem entsprechend zur Bildung einer monolithischen Leichtgewichtstruktur aus kohlenstoffaserverstärktem Siliciumcarbid (C/SiC).

Weitere vorteilhafte Merkmale der erfindungsgemäßen Leichtgewichtstruktur ergeben sich aus den Unteransprüchen und in den Figuren dargestellten Ausführungsbeispielen.

Es wurde gefunden, daß faserverstärkte Keramiken auf der Basis von C/SiC und C/C über hervorragende Steifigkeits- und Festigkeitseigenschaften, eine hohe Wärmeleitung, eine niedrige Wärmeausdehnung, ausgezeichnete Korrosionsbeständigkeit, eine hohe Härte und damit Verschleißbeständigkeit in Kombination mit einer niedrigen Dichte verfügen. Dabei ist es absolut gas- und flüssigkeitsdicht. Darüberhinaus sind faserverstärkte Keramiken im Vergleich zu Glas, Glaskeramiken und pulvermetallurgisch hergestellten Keramiken sehr schadenstolerant und bruchunempfindlich. Besonders hervorzuheben sind die große Geometrie- und Formenvielfalt bis zu Durchmessern von drei Metern. Erfindungsgemäß kann das C/SiC und C/C mit kontinuierlicher Faserverstärkung, mit Filz- oder Vliesverstärkung oder mit Kurzfaserverstärkung auf der Basis von Kohlenstoffasern verstärkt sein. Verstärkungen mit anderen thermisch stabilen Fasern sind im erfindungsgemäßen Gedanken miterfaßt.

Das Verfahren zur Herstellung erfindungsgemäßer hochsteifer Leichtgewichtstrukturen ist dadurch gekennzeichnet, daß zur Bildung des Stützgerüstes zwischen einer Frontplatte und einer Rückplatte leistenförmige und/oder rohrförmige und/oder plattenförmige und/oder T-förmige und/oder U-förmige und/oder T-förmige und/oder Y-förmige Teile aus faserverstärkter Keramik, vorzugsweise kohlenstoffaserverstärkter Kohlenstoff (C/C) oder kohlenstoffaserverstärktes Siliciumcarbid (C/SiC), aufgestellt und mittels Kunstharz verklebt, die verbleibenden Leerräume entsprechende Hohlräume ausbilden und danach diese Anordnung in einen Ofen unter Aufrechterhaltung einer nicht oxidierenden Atmosphäre, vorzugsweise Vakuum auf mindestens die Schmelztemperatur von Silicium (>1405°C) erhitzt, das geschmolzene Silicium in den Werkstoff infiltriert bzw. penetriert und zumindest teilweise mit dem angebotenen Kohlenstoff der Matrix und der Fasern zu Siliciumcarbid abreagiert und nach dem Abkühlen das so erhaltene Stützgerüst unverrückbar miteinander zu einer monolithischen Leichtgewichtstruktur aus C/SiC verbunden ist. Die Silicium-Infiltration mit der damit verbundenen SiC-Reaktion dient zum einen zur Verdichtung des Strukturwerkstoffs und zum anderen zur Fügung der Einzelsegmente zu einer monolithischen Leichtgewichtstruktur. Der beim Zusammenbau der Einzelkomponenten verwendete Kunstharz, vorzugsweise auf Phenolharzbasis mit SiC-und/oder C- und/oder Si-Pulveranreicherungen und/oder Kohlenstoffasern, reagiert vorteilhafterweise bei der thermischen Behandlung vor Erreichen der Schmelztemperatur von Silicium (1405°C) zu einem Kohlenstoff-Silicium-Siliciumcarbid-Mischwerkstoff ab, der eine ähnliche Zusammensetzung wie die verwendeten Strukturelemente hat, so daß die ehemaligen Füge- bzw. Klebeflächen nach der Silicium-Infiltration die gleichen physikalischen und chemischen Eigenschaften wie der Strukturwerkstoff aus faserverstärkter Keramik aufweist. Es kommt durch die Silicium-Infiltration zur Bildung einer monolithischen Struktur mit absolut homogenen Eigenschaften. Das erfindungsgemäße Verfahren sieht vor, daß das zur Infiltration/Reaktion verwendete Silicium den zu infiltrierenden Bauteilen pulverförmig und/oder in Granulatform und/oder als Silicium-Formkörper angeboten wird. Dabei kann erfindungsgemäß das jeweils verwendete Silicium von unten und/oder von oben und/oder im Inneren des zu infiltrierenden Bauteils angeboten werden.

Vorteilhafte Weiterbildungen des Verfahrens ergeben sich aus den Verfahrensunteransprüchen. Anhand der Figuren 1 bis 6 werden erfindungsgemäße hochsteife Leichtgewichtstrukturen und deren Herstellung beschrieben. Es zeigt
- Figur 1: einen Vertikalschnitt durch eine erfindungsgemäße hochsteifen Leichtgewichtstruktur.
- Figur 2: einen Horizontalschnitt durch das Stützgerüst der hochsteife Leichtgewichtstruktur nach Figur 1 entlang der Ebene A-B.
- Figur 3: einen Vertikalschnitt durch eine Anordnung zur Herstellung einer erfindungsgemäßen hochsteifen Leichgewichtstruktur.
- Figur 4: einen Ausschnitt eines Horizontalschnitts durch die Anordnung nach Figur 3 in der Ebene C-D.
- Figur 5: entsprechende Vertikalschnitte durch Anordnungen zur Herstellung von erfindungsgemäßen hochsteifen Leichtgewichtstrukturen.
- Figur 6: die Draufsicht auf eine Anordnung zur Herstellung einer erfindungsgemäßen hochsteifen Leichtgewichtstruktur.

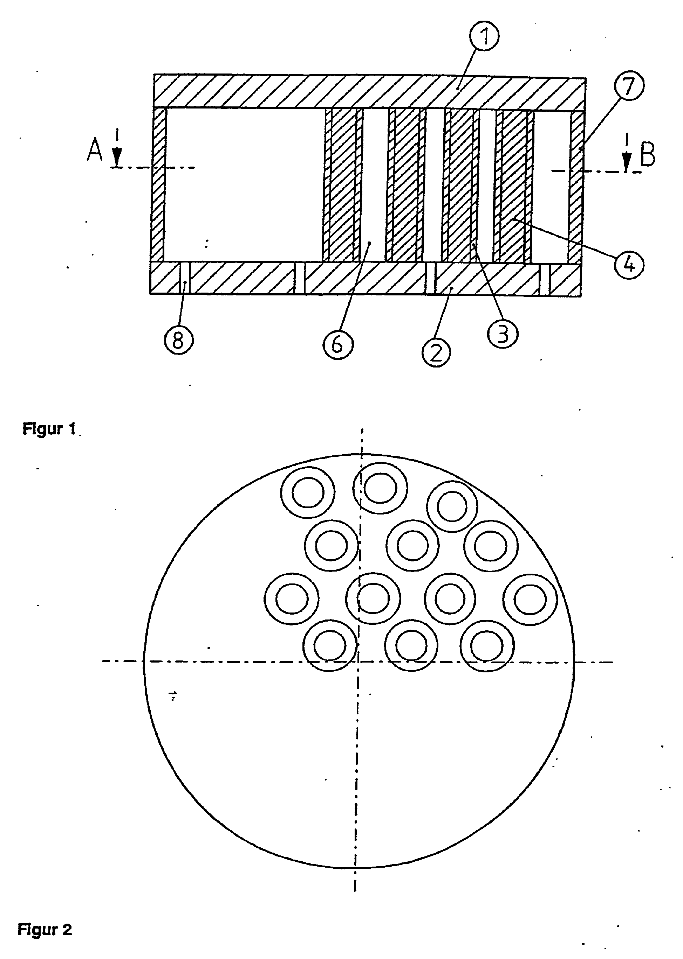

Wie aus der Figur 1 ersichtlich, besteht die erfindungsgemäße hochsteife Leichtgewichtstruktur aus einer Frontplatte (1) und einer Rückplatte (2), die über ein Stützgerüst (3) unverrückbar miteinander verbunden sind. Das Stützgerüst besteht, wie aus Figur 2 hervorgeht, aus rohrförmigen Teilen (4), die mittels eines Kunstharzes vor der thermischen Behandlung mit der Front- und Rückplatte verbunden sind und einen Hohlraum (6) bilden, um das Gewicht der Leichtgewichtstruktur möglichst gering zu halten. Im Anschluß daran wird dann das aus Frontplatte (1), Rückplatte (2) und Stützgerüst bestehende Halbzeug in einem Ofen unter Sauerstoffausschluß, vorzugsweise Vakuum, auf mindestens die Schmelztemperatur von Silicium (>1405°C) erhitzt. Das geschmolzene Silicium infiltriert bzw. penetriert dann in die Gesamtanordnung und reagiert zumindest teilweise mit dem angebotenen Kohlenstoff zu Siliciumcarbid ab. Diese Siliciuminfiltration bzw. Reaktion dient auch zur Herstellung der Verbindung zwischen Front- und Rückplatte sowie dem Stützgerüst (3) zu einer monolithischen Struktur. Der Querschnitt und die Größe des Hohlraums (6) kann erfindungsgemäß je nach Anwendung beliebig (z.B. rund, vieleckig, sechseckig) sein und ist erfindungsmäßig miterfaßt. Es hat sich als zweckmäßig erwiesen, die Rückplatte (2) oder die Seitenwände (7) mit Entlüftungsbohrungen (8), wie aus Figur 1 ersichtlich, zu versehen. In dem Ausführungsbeispiel ist die Frontplatte (1), die Rückplatte (2) und das Stützgerüst (3) aus kurzfaserverstärktem C/SiC hergestellt. In analoger Weise können als Werkstoff für die Front- und Rückplatte sowie die rohrförmigen oder plattenförmigen Teile des Stützgerüsts auch C/C-Verbundwerkstoffe mit Kurzfaser- und/oder Filz- und/oder Vlies-Verstärkung oder faserverstärkte Keramiken mit kontinuierlicher Faserverstärkung auf der Basis von C/C und C/SiC verwendet werden.

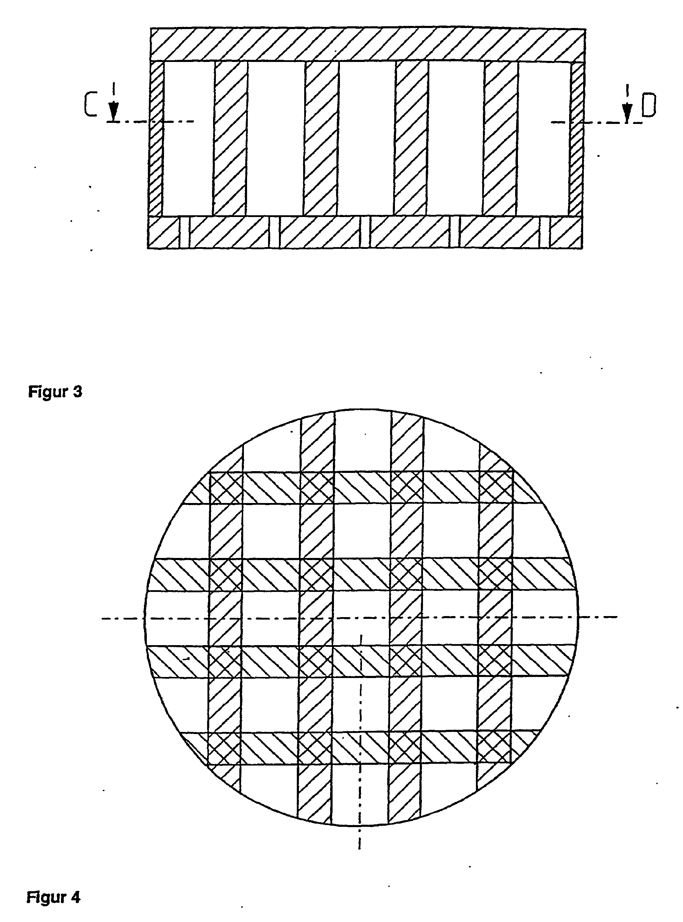

Anhand der Figur 3 und 4 wird nachfolgend eine zweite Möglichkeit zur Bildung einer hochsteifen Leichtgewichtstruktur aus faserverstärkter Keramik beschrieben. Anstelle der rohrförmigen Teile sind bei diesem Ausführungsbeispiel für die Herstellung des Stützgerüsts (3) platten- bzw. leistenförmige Teile aus faserverstärkter Keramik (C/C und/oder C/SiC) zwischen die Front- und Rückplatte aus faserverstärkter Keramik (C/C und/oder C/SiC) aufgestellt und verklebt worden. Nach Verbinden des so hergestellten Stützgerüsts (3) mit der Frontplatte (1) und der Rückplatte (2) entsteht dann, wie im Zusammenhang in Figur 1 und 2 beschrieben, durch die Infiltration mit flüssigem Silicium sowie die Reaktion zu Siliciumcarbid eine hochsteife Leichtgewichtstruktur in monolithischer Bauweise. Dabei kann der Querschnitt des platten-/leistenförmigen Stützgerüsts, die Abstände zwischen den Leisten und die Winkelanordnung der Stützleisten beliebig variieren. Das erfinderische Verfahren sieht auch eine Kombination von rohrförmigen und leistenförmigen und plattenförmigen Stützstrukturen zwischen Front- und Rückplatte vor. Selbstverständlich können die Front- und Rückplatte sowohl plan als auch sphärisch ausgebildet sein. Die Stützkonstruktion muß dann vor dem Zusammenbau zum Halbzeug bzw. vor der Infiltration zum keramischen monolithischen Bauteil entsprechend mechanisch bearbeitet werden.

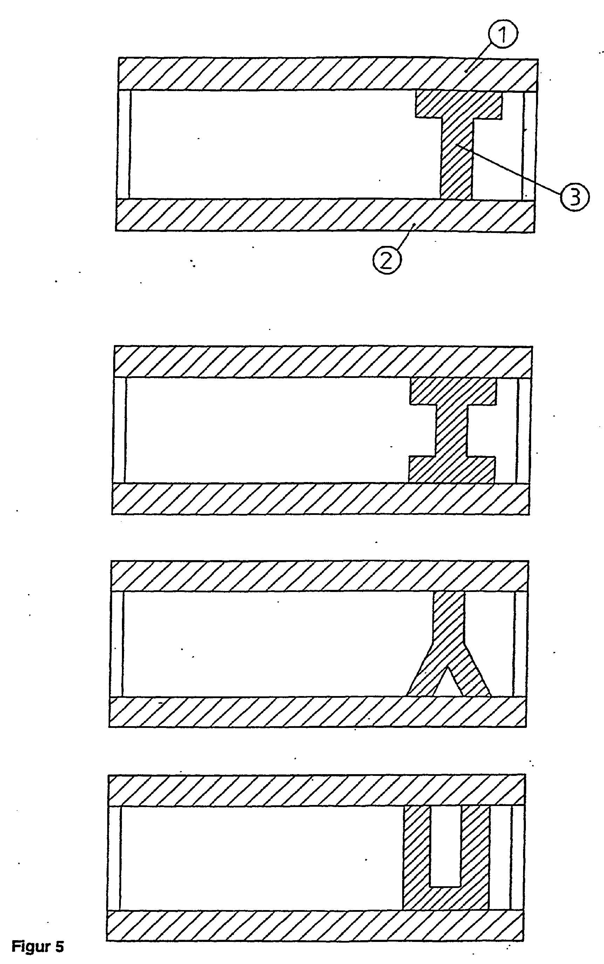

In Figur 5 sind entsprechende Vertikalschnitte durch mögliche Anordnungen zur Herstellung von erfindungsgemäßen hochsteifen Leichtgewichtstrukturen mit einem U-förmigen, Y-förmigen, T-förmigen und T-förmigen Stützgerüst (3) zwischen Front- (1) und Rückplatte (2) abgebildet.
Figur 6 zeigt die Draufsicht auf eine Anordnung zur Herstellung einer erfindungsgemäßen hochsteifen Leichtgewichtstruktur mit zylinderförmigem Stützgerüst (3) zwischen der Front- (1) und Rückplatte (2). Diese hochsteife Leichtgewichtstruktur aus faserverstärkter Keramik in monolithischer Sandwich-Bauweise mit den Abmessungen 1200 x 1100 x 60 mm² dient beispielsweise als Laser-Meßtisch.

Wie sich aus den Figurenbeschreibungen ergibt, läßt sich das Stützgerüst von erfindungsgemäßen hochsteifen Leichtgewichtstrukturen und damit die Leichtgewichtstruktur selbst in einfacher Weise und aus einfachen Bauteilen und damit preiswert herstellen, ohne daß bei der Herstellung das Stützgerüsts Risse auftreten können.

## Patentansprüche

1. Leichtgewichtstruktur, umfassend
- eine Frontplatte (1),
- eine Rückplatte (2), und
- ein Stützgerüst (3), das die Frontplatte (1) mit der Rückplatte (2) unter Bildung mindestens eines Hohlraumes (6) verbindet,
wobei die Frontplatte (1) die Rückplatte (2) und das Stützgerüst (3) aus im Wesentlichen identischem Material, nämlich aus kohlenstofffaserverstärktem Siliziumcarbid bestehen, und wobei das Stützgerüst (3) mit der Frontplatte (1) und der Rückplatte (2) über einen Bestandteil des Materials nämlich über Silizium durch einen Schmelzvorgang oder durch Infiltrieren mit dem geschmolzenen Bestandteil des Materials zur Bildung einer monolithischen Struktur miteinander verbunden sind,
**dadurch gekennzeichnet, dass**
die Frontplatte (1) und/oder die Rückplatte (2) aus mehreren Segmenten bestehen, die über Silizium durch einen Schmelzvorgang oder durch Infiltrieren mit Silizium miteinander verbunden sind.

2. Leichtgewichtstruktur nach Anspruch 1,
**dadurch gekennzeichnet, dass**
das Stützgerüst (3) aus einzelnen, voneinander getrennten Stücken besteht, die als Massiv- und/oder Hohlprofile ausgebildet sind.

3. Leichtgewichtstruktur nach Anspruch 1,
**dadurch gekennzeichnet, dass**
das Stützgerüst (3) aus miteinander verbundenen Stücken besteht.

4. Leichtgewichtstruktur nach einem der vorhergehenden Ansprüchen,
**dadurch gekennzeichnet, dass**
die Rückplatte (2) und/oder die Frontplatte (1) Bohrungen oder Öffnungen (8) aufweisen, welche den mindestens einen Hohlraum (6) mit einer Außenseite der Rückplatte (2) und/oder der Frontplatte (1) verbinden.

5. Grünkörper zur Herstellung einer Leichtgewichtstruktur, umfassend
- eine Frontplatte (1),
- eine Rückplatte (2), und
- ein Stützgerüst (3), das die Frontplatte (1) mit der Rückplatte (2) unter Bildung mindestens eines Hohlraumes (6) verbindet,
wobei das Stützgerüst (3) mit der Frontplatte (1) und/oder der Rückplatte (2) über Befestigungsmittel im Wesentlichen unverrückbar verbunden ist und die Frontplatte, die Rückplatte und das Stützgerüst aus kohlenstofffaserverstärktem Kohlenstoff (C/C) oder aus kohlenstofffaserverstärktem Siliziumcarbid (C/SiC) oder aus Mischungen hiervon bestehen,
**dadurch gekennzeichnet, dass**
die Frontplatte (1) und/oder die Rückplatte (2) aus mehreren Segmenten bestehen.

6. Grünkörper nach Anspruch 5,
**dadurch gekennzeichnet, dass**
die Befestigungsmittel formschlüssige Verbindungseinrichtungen, insbesondere Schrauben, Bolzen oder Stifte und/oder Verklebungen und/oder eine Sinterschicht umfassen.

7. Grünkörper nach Anspruch 6,
**dadurch gekennzeichnet, dass**
die Verklebungen oder die Sinterschicht ein Kunstharz, insbesondere ein Phenolharz umfassen, das vorzugsweise Füllstoffe in Form von Kohlenstoff, Siliziumcarbid, Silizium oder Mischungen hiervon enthält und derart beschaffen ist, dass sie beim Schmelzvorgang oder beim Infiltrieren zum identischen Material umgewandelt wird.

8. Grünkörper nach Anspruch 5,
**dadurch gekennzeichnet, dass**
die Kohlenstofffasern als Kurzfasern, Gewebe, Filz oder Mischungen hiervon hergestellt sind.

9. Verfahren zur Herstellung einer Leichtgewichtstruktur umfassend die Schritte:
a) Herstellung einer Frontplatte (1), einer Rückplatte (2) und eines Stützgerüstes (3) jeweils aus kohlenstofffaserverstärktem Kohlenstoff (C/C) oder kohlenstofffaserverstärktem Silizium (C/SiC);
b) Verbinden des Stützgerüstes (3) mit der Frontplatte (1) und der Rückplatte (2) derart, dass das Stützgerüst (3) zwischen der Frontplatte (1) und der Rückplatte (2) liegt und mit beiden unverrückbar verbunden ist, zur Bildung eines Grünkörpers mit mindestens einem Hohlraum (6) zwischen der Frontplatte (1) und der Rückplatte (2);
c) Einbringen des Grünkörpers in einen Ofen und Aufheizen des Grünkörpers unter Aufrechterhaltung einer nicht oxidierenden Atmosphäre oder Umgebung auf eine Temperatur, die mindestens der Schmelztemperatur von Silizium (1405°C) entspricht;
d) Zuführen von geschmolzenem Silizium zum Grünkörper derart, dass das Silizium in den Grünkörpern eindringt und mindestens mit Teilen des Kohlenstoffs zu Siliziumcarbid unter Bildung der Leichtgewichtstruktur abreagiert;
e) Abkühlen der Leichtgewichtstruktur,
**dadurch gekennzeichnet, dass**
die Frontplatte (1) und/oder die Rückplatte (2) aus mehreren Segmenten zusammengesetzt werden.

10. Verfahren nach Anspruch 9,
**dadurch gekennzeichnet, dass**
im Schritt b) das Stützgerüst mit der Frontplatte (1) und der Rückplatte (2) verklebt wird.

11. Verfahren nach Anspruch 10,
**dadurch gekennzeichnet, dass**
die Frontplatte (1) und die Rückplatte (2) jeweils mit einer Klebeschicht versehen und das Stützgerüst (3) über die Klebeschicht mit der Frontplatte (1) und der Rückplatte (2) verbunden wird.

12. Verfahren nach Anspruch 9,
**dadurch gekennzeichnet, dass**
das Silizium im Schritt d) dem Grünkörper in Form von Siliziumgranulat oder Siliziumpulver zugeführt wird.

13. Verfahren nach Anspruch 12,
**dadurch gekennzeichnet, dass**
das Siliziumgranulat oder Siliziumpulver dem Grünkörper vor dem Aufheizen innerhalb des Hohlraumes (6), von einer Oberseite, von einer Unterseite oder von einer Kombination hiervon zugeführt wird.

14. Verfahren nach Anspruch 9,
**dadurch gekennzeichnet, dass**
die Kohlenstofffasern als Kurzfasern, Gewebe, Filz oder Mischungen hiervon hergestellt werden.

15. Verwendung einer Leichtgewichtstruktur nach einem der Ansprüche 1 bis 4 als Stützstruktur oder Unterlage für Mess-, Spann- oder Materialbearbeitungszwecke.

## Claims

1. Lightweight structure, comprising
- a front plate (1),
- a rear plate (2), and
- a support structure (3) which joins the front plate (1) to the rear plate (2), forming at least one cavity (6),
wherein the front plate (1), the rear plate (2) and the support structure (3) consist of substantially identical material, namely of carbon-fibre-reinforced silicon carbide, and wherein the support structure (3) is joined to the front plate (1) and the rear plate (2) by way of a constituent of the material, namely by way of silicon, by means of a fusing operation or by infiltration with the molten constituent of the material, forming a monolithic structure with one another,
**characterized in that**
the front plate (1) and/or the rear plate (2) consist(s) of a plurality of segments which are joined to one another by way of silicon by means of a fusing operation or by infiltration with silicon.

2. Lightweight structure according to claim 1,
**characterized in that**
the support structure (3) consists of individual pieces separate from one another which are in the form of solid and/or hollow profiles.

3. Lightweight structure according to claim 1,
**characterized in that**
the support structure (3) consists of pieces joined to one another.

4. Lightweight structure according to any one of the preceding claims,
**characterized in that**
the rear plate (2) and/or the front plate (1) has(have) bores or openings (8) which connect the at least one cavity (6) to the outside of the rear plate (2) and/or of the front plate (1).

5. Green body for the production of a lightweight structure, comprising
- a front plate (1),
- a rear plate (2), and
- a support structure (3) which joins the front plate (1) to the rear plate (2), forming at least one cavity (6),
wherein the support structure (3) is joined substantially immovably to the front plate (1) and/or the rear plate (2) by way of fixing means, and the front plate, the rear plate and the support structure consist of carbon-fibre-reinforced carbon (C/C) or of carbon-fibre-reinforced silicon carbide (C/SiC) or of mixtures thereof,
**characterized in that**
the front plate (1) and/or the rear plate (2) consist(s) of a plurality of segments.

6. Green body according to claim 5,
**characterized in that**
the fixing means comprise positively engaging joining devices, especially screws, bolts or pins, and/or adhesive bonds and/or a sintered layer.

7. Green body according to claim 6,
**characterized in that**
the adhesive bonds or the sintered layer comprise(s) a synthetic resin, especially a phenolic resin, which preferably comprises fillers in the form of carbon, silicon carbide, silicon or mixtures thereof and is such that there is conversion into an identical material during the fusing operation or during infiltration.

8. Green body according to claim 5,
**characterized in that**
the carbon fibres were produced in the form of short fibres, woven fabric, felt or mixtures thereof.

9. Method of producing a lightweight structure,
comprising the steps of:
a) producing a front plate (1), a rear plate (2) and a support structure (3) in each case from carbon-fibre-reinforced carbon (C/C) or carbon-fibre-reinforced silicon (C/SiC);
b) joining the support structure (3) to the front plate (1) and the rear plate (2) in such a way that the support structure (3) is located between the front plate (1) and the rear plate (2) and is immovably joined to both, forming a green body having at least one cavity (6) between the front plate (1) and the rear plate (2);
c) introducing the green body into a furnace and heating the green body, while maintaining a non-oxidising atmosphere or environment, to a temperature corresponding at least to the fusing temperature of silicon (1405°C);
d) supplying molten silicon to the green body in such a way that the silicon penetrates into the green bodies and reacts at least with some of the carbon to form silicon carbide, forming the lightweight structure;
e) cooling the lightweight structure,
**characterized in that**
the front plate (1) and/or the rear plate (2) is(are) composed of a plurality of segments.

10. Method according to claim 9,
**characterized in that**
in step b) the support structure is adhesively bonded to the front plate (1) and the rear plate (2).

11. Method according to claim 10,
**characterized in that**
the front plate (1) and the rear plate (2) are each provided with an adhesive layer, and the support structure (3) is joined by way of the adhesive layer to the front plate (1) and the rear plate (2).

12. Method according to claim 9,
**characterized in that**
the silicon in step d) is supplied to the green body in the form of silicon granules or silicon powder.

13. Method according to claim 12,
**characterized in that**
prior to the heating, the silicon granules or silicon powder are(is) supplied to the green body inside the cavity (6), from an upper side, from a lower side or from a combination thereof.

14. Method according to claim 9,
**characterized in that**
the carbon fibres are produced in the form of short fibres, woven fabric, felt or mixtures thereof.

15. Use of a lightweight structure according to any one of claims 1 to 4 as a supporting structure or base for measuring, clamping or material-machining purposes.

## Revendications

1. Structure légère comprenant
- une plaque avant (1)
- une plaque arrière (2) et
- une ossature support (3) qui relie la plaque avant (1) à la plaque arrière (2) en définissant au moins une cavité (6),
la plaque avant (1), la plaque arrière (2) et l'ossature support (3) étant réalisées dans des matériaux sensiblement identiques, à savoir du carbure de silicium renforcé par des fibres de carbone, et l'ossature support (3) étant reliée à la plaque avant (1) et à la plaque arrière (2) par un composant dudit matériau, à savoir le silicium, selon un procédé de fusion ou par infiltration dudit composant du matériau à l'état fondu pour former une structure monolithique,
**caractérisée en ce que**
la plaque avant (1) et/ou la plaque arrière (2) est/sont composée(s) d'une pluralité de segments reliés entre eux par du silicium selon un procédé de fusion ou par infiltration de silicium.

2. Structure légère selon la revendication 1, **caractérisée en ce que** l'ossature support (3) se compose d'éléments distincts séparés les uns des autres et se présentant sous la forme de profilés pleins et/ou creux.

3. Structure légère selon la revendication 1, **caractérisée en ce que** l'ossature support (3) est composée d'éléments reliés entre eux.

4. Structure légère selon l'une quelconque des revendications précédentes, **caractérisée en ce que** la plaque arrière (2) et/ou la plaque avant (1) présente(nt) des perçages ou orifices (8) reliant la ou les cavité(s) (6) à une face extérieure de la plaque arrière (2) et/ou de la plaque avant (1).

5. Ébauche permettant de fabriquer une structure légère, comprenant
- une plaque avant (1)
- une plaque arrière (2) et
- une ossature support (3), qui relie la plaque avant (1) à la plaque arrière (2) en définissant au moins une cavité (6),
l'ossature support (3) étant reliée sensiblement fixement à la plaque avant (1) et/ou la plaque arrière (2) par le biais de moyens de fixation et la plaque avant, la plaque arrière et l'ossature support étant réalisées en carbone renforcé par des fibres de carbone (C/C) ou en carbure de silicium renforcé par des fibres de carbone (C/SiC) ou en des mélanges de ceux-ci,
**caractérisée en ce que** la plaque avant (1) et/ou la plaque arrière (2) est/sont composée(s) d'une pluralité de segments.

6. Ébauche selon la revendication 5, **caractérisée en ce que** les moyens de fixation comprennent des dispositifs d'assemblage par engagement positif, notamment des vis, des boulons ou des goupilles et/ou des collages et/ou une couche d'agglomération.

7. Ébauche selon la revendication 6, **caractérisée en ce que** les collages ou la couche d'agglomération comprennent une résine synthétique, en particulier une résine phénolique, qui contient de préférence des charges sous forme de carbone, carbure de silicium, silicium ou de mélanges de ceux-ci et qui est apte à se transformer en le même matériau lors de la fusion ou de l'infiltration.

8. Ébauche selon la revendication 5, **caractérisée en ce que** les fibres de carbone se présentent sous la forme de fibres courtes, de tissus, de mats ou de mélanges de ceux-ci.

9. Procédé de fabrication d'une structure légère comprenant les étapes suivantes :
a) fabrication d'une plaque avant (1), d'une plaque arrière (2) et d'une ossature support (3) chacune réalisée en carbone renforcé de fibres de carbone (C/C) ou en carbure de silicium renforcé de fibres de carbone (C/SiC) ;
b) assemblage de l'ossature support (3) avec la plaque avant (1) et la plaque arrière (2) de manière que l'ossature support (3) se retrouve entre la plaque avant (1) et la plaque arrière (2) et soit reliée fixement aux deux dites plaques afin de former une ébauche présentant au moins une cavité (6) entre la plaque avant (1) et la plaque arrière (2) ;
c) introduction de l'ébauche dans un four et chauffage de l'ébauche sous atmosphère ou environnement non oxydant(e) à une température supérieure ou égale à la température de fusion du silicium (1405 °C) ;
d) apport de silicium en fusion dans l'ébauche de manière que le silicium pénètre dans l'ébauche et réagisse avec au moins des parties du carbone pour former du carbure de silicium et constituer ainsi la structure légère ;
e) refroidissement de la structure légère,
**caractérisé en ce que** la plaque avant (1) et/ou la plaque arrière (2) est/sont composée(s) d'une pluralité de segments.

10. Procédé selon la revendication 9, **caractérisé en ce que**, lors de l'étape b), l'ossature support est collée à la plaque avant (1) et à la plaque arrière (2).

11. Procédé selon la revendication 10, **caractérisé en ce que** la plaque avant (1) et la plaque arrière (2) reçoivent chacune une couche de colle et **en ce que** l'ossature support (3) est reliée à la plaque avant (1) et à la plaque arrière (2) par ladite couche de colle.

12. Procédé selon la revendication 9, **caractérisé en ce que**, dans l'étape d), le silicium est ajouté à l'ébauche sous la forme d'un granulat de silicium ou de poudre de silicium.

13. Procédé selon la revendication 12, **caractérisé en ce que** le granulat de silicium ou la poudre de silicium est ajouté(e) à l'ébauche avant le chauffage, et ce à l'intérieur de la cavité (6) depuis une face supérieure, une face inférieure ou une combinaison des deux.

14. Procédé selon la revendication 9, **caractérisé en ce que** les fibres de carbone se présentent sous la forme de fibres courtes, de tissus, de mats ou de mélanges de ceux-ci.

15. Utilisation d'une structure légère selon l'une quelconque des revendications 1 à 4 en tant que structure support ou d'appui pour des opérations de mesurage, d'ablocage ou d'usinage de matériaux.
